# EUROPEAN PATENT APPLICATION

(11) **EP 4 183 460 A1**
(43) Date of publication of application: **24.05.2023**
(21) Application number: 22208211.7
(22) Date of filing: 18.11.2022
(51) Int. Cl.: A63G 3/00, A63G 21/18, A63G 31/16

(54) **EXPERIENTIAL WATER TUNNEL AND METHOD THEREOF**

(30) Priority: 18.11.2021 US 202163264265 P
(71) Applicant: Vortex Aquatic Structures International Inc., Pointe-Claire, Québec H9R 1C6 (CA)
(72) Inventor: HAMELIN, Stephen, L'Ile-Cadieux, QUEBEC J7V 8P3 (CA)
(74) Representative: Cabinet Laurent & Charras

(57) **Abstract**

A modular experiential water tunnel comprises a plurality of arches and experiential modules adapted to be configured and installed onto any conventional water ride. The modular tunnel may further comprise a controller in communication with a server, the controller being adapted to adjust the experience provided by the modular tunnel.

## Description

### Cross-Reference to Related Applications

The present patent application claims the benefits of priority of American Provisional Patent Application No. 63/264,265, entitled "Modular Experiential Water Tunnel and Method Thereof', and filed at the United States Patent and Trademark Office on November 18, 2022, the content of which is incorporated herein by reference.

### Field of the Invention

The present invention generally relates to modular ride installations.

### Background of the Invention

Water parks typically seek to offer guests new and exciting attractions to provide them memorable experiences. These attractions often desire to provide participants increasingly engaging rides by offering multisensory experiences.

To do so, the rides offered by water parks are typically custom installations capable of providing a distinctive and unique experience. The custom nature of the rides typically leads to increased costs and installation times. Moreover, any future adjustments or modifications to the rides may be equally complicated and/or costly.

There is therefore a need for a modular and cost-effective multisensory ride for water parks.

### Summary of the Invention

The shortcomings of the prior art are generally mitigated by a modular experiential water tunnel comprising arches and experiential modules capable of being easily installed and modified on a water ride.

Other and further aspects and advantages of the present invention will be obvious upon an understanding of the illustrative embodiments about to be described or will be indicated in the appended claims, and various advantages not referred to herein will occur to one skilled in the art upon employment of the invention in practice.

### Brief Description of the Drawings

The above and other aspects, features and advantages of the invention will become more readily apparent from the following description, reference being made to the accompanying drawings in which:
Figure 1 is a perspective view of a modular experiential tunnel in accordance with the principles of the present invention.
Figure 2 is a perspective view of exemplary arches and experiential modules as used in the modular experiential tunnel of Figure 1.
Figure 3 is another perspective view of exemplary arches and experiential modules as used in the modular experiential tunnel of Figure 1.

### Detailed Description of the Preferred Embodiment

A novel **modular experiential water tunnel** will be described hereinafter. Although the invention is described in terms of specific illustrative embodiments, it is to be understood that the embodiments described herein are by way of example only and that the scope of the invention is not intended to be limited thereby.

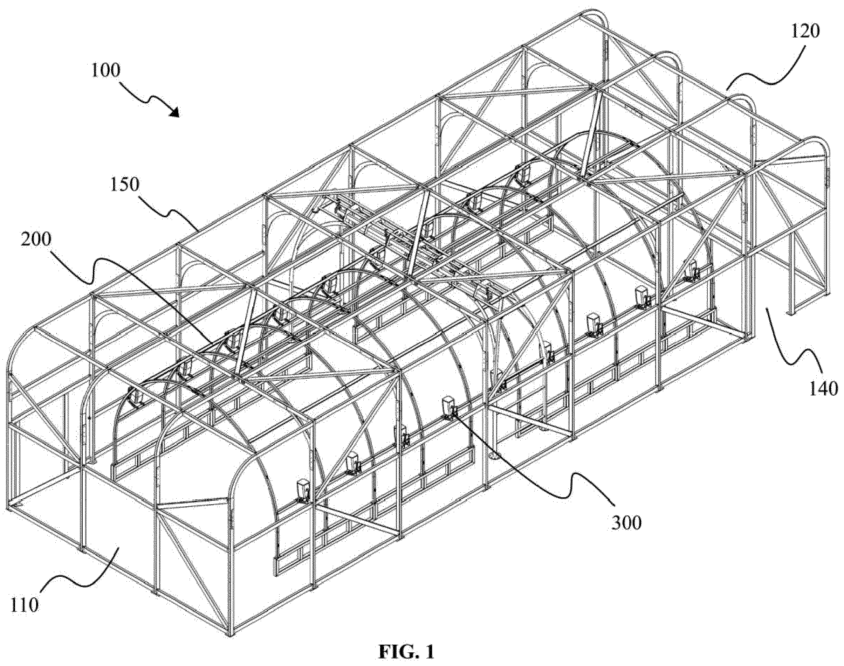

Referring to FIG. 1, an embodiment of a modular experiential water tunnel 100 for providing participants a multimedia passageway is illustrated. The modular tunnel 100 generally comprises one or more support structures 200 and one or more experiential modules 300 adapted to create an immersive and interactive experience within the modular tunnel 100. The modular experiential water tunnel 100 may further comprise an exterior structure or shell 150 adapted to enclose the interior space of the modular experiential water tunnel 100.

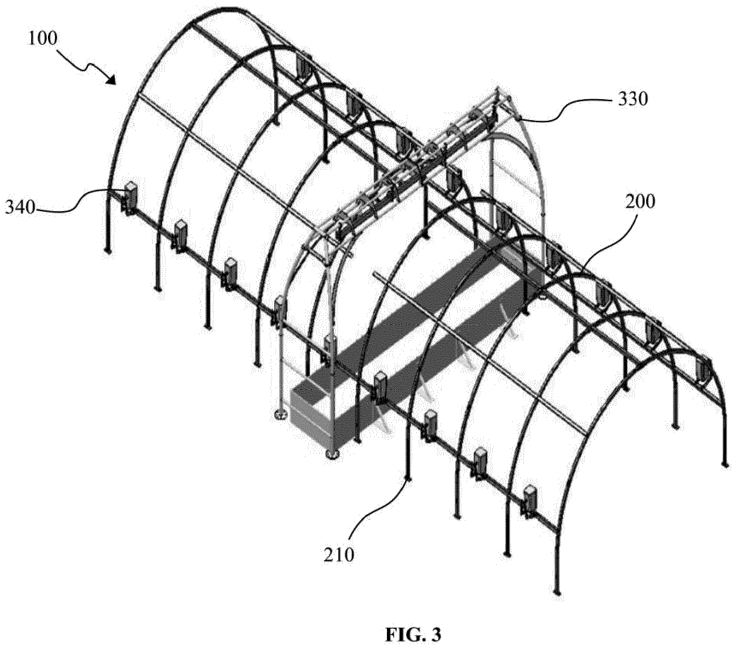

Broadly, the support structures 200 are adapted to support some or all of the experiential modules 300 and may comprise any shape suitable for providing adequate support and placement of the experiential modules 300. In certain embodiments, the support structures 200 may further support a portion or the entirety of the shell 150. Referring to FIGS. 1 to 3, the support structures 200 are embodied as arches 200 although it may be appreciated that the support structures 200 may comprise any other suitable shape without departing from the scope of the invention.

In certain embodiments, the modular tunnel 100 may be constructed on top of or as part of a water ride 10 such as, for example, a lazy river. To that end, participants on the water ride 10 may be conveyed through an entrance 110 and out of an exit 120 of the modular tunnel 100.

Broadly, the size of the modular tunnel 100 may be defined by the size and number of arches 200. In the embodiment illustrated in FIG. 1, the modular tunnel 100 comprises ten arches 200. Understandably, the modular tunnel 100 may comprise any other suitable number of arches 200 in order to extend any desirable length of the water ride 10. For example, the modular tunnel 100 may comprise a higher number of arches 200, in association with a slower water conveyance speed through the water ride 10, to provide a lengthier experience for participants.

In a preferred embodiment, the modular tunnel 100 may comprise a suitable number of arches 200 for creating a dark environment within the modular tunnel 100 and to provide participants sufficient time within the modular tunnel 100 to experience the experiential modules 300.

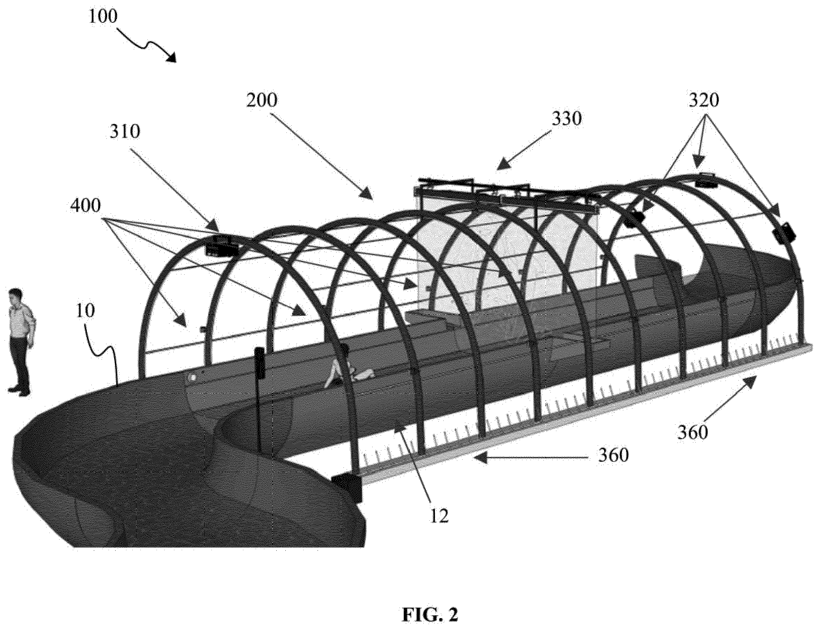

Referring now to FIG. 2, the width of the arches 200 may be configured to receive the water ride 10 in the interior space defined by the arches 200 with one or more feet 210 of the arches 200 being in contact with and supported by the floor or a base 140 of the modular tunnel 100. In other embodiments, the arches 200 may have a width being substantially similar to the water ride 10 with the one or more feet 210 being in contact with and supported by side walls 12 of the water ride 10.

In certain embodiments, one or more of the arches 200 may be positioned at an angle relative to an adjacent arch 200 such as to create a curvature of the multimedia passageway. The modular tunnel 100 may therefore comprise any desirable number of curvatures. Understandably, the modular tunnel 100 may curve in the vertical plane, horizontal plane or a combination thereof. In other embodiments, adjacent arches 200 may be positioned at differing heights relative to one another in accordance with variations in the topography of the base 140. The modular tunnel 100 may further comprise arches 200 of varying size relative to one another thereby creating one or more restricting or expanding spaces within the modular tunnel 100.

Broadly, the experiential modules 300 may provide projection mapping, lighting, water effects, visual effects, music, soundscapes or any other suitable experience within the modular tunnel 100. To that end, the experiential modules 300 may therefore comprise lasers 320, LED lighting modules (not shown), water curtains 330, speakers 340, fog generator 360, a projector 310 and/or any other suitable system.

In certain embodiments, one or more of the experiential modules 300 may conjointly operate to provide a desired experience. For example, the projector 310 may project an image or video on the water curtains 330 or a fog generated by the fog generator 360. Alternatively, the speakers 340 may emit sounds or music in accordance with the LED lighting modules, the fog generator 360 or the projector 310.

The modular tunnel 100 may further comprise one or more sensors 400. In certain embodiments, the sensors 400 may activate one or more of the experiential modules 300 when a predetermined condition is met such as, for example, when a participant is detected at or near the entrance 110 of the modular tunnel 100 or when a predetermined lighting is achieved.

In certain embodiments, one or more of the experiential modules 300 may be integrated into the arches 200. For example, the arches 200 may comprise LED lighting modules integrated in an inner surface thereof. The arches 200 may further comprise speakers 200 integrated therein.

It may be appreciated that the modular tunnel 100 is constructed in a modular fashion to allow the arches 200 and experiential modules 300 to be installed in any desirable configuration in accordance with the requirements of the water ride 10. For example, the modular tunnel 100 may be configured with any desirable number of arches 200 and experiential modules 300 affixed to the arches 200 or to any other structure therein.

To control the motion and/or operation of the of the experiential modules 300, the modular tunnel 100 may comprise a controller 500 (not shown), such as a CPU or a computer or any computerized device. The modular tunnel may further comprise a manual user input device or user interface 510 (not shown), such as, but not limited to, a a touch screen, a keypad, a keyboard, a computerized device connected to the apparatus, a mouse, a voice or movement recognition system or a scanner or touch screen in order to control the experiential modules 300. In another embodiment, the controller 500 may act as a client to retrieve instructions regarding the operation of the experiential modules 300 from a remote server 600 (not shown) through a network connection.

While illustrative and presently preferred embodiments of the invention have been described in detail hereinabove, it is to be understood that the inventive concepts may be otherwise variously embodied and employed and that the appended claims are intended to be construed to include such variations except insofar as limited by the prior art.

## Claims

1. A modular experiential water tunnel comprising:
one or more support structures;
one or more experiential modules supported by the one or more support structures;
an entrance at a first end of the one or more support structures;
an exit at a second end of the one or more support structures;
a water ride passing from the entrance to the exit under the one or more support structures.

2. The modular experiential water tunnel of claim 1, further comprising a shell enclosing the one or more support structures and the one or more experiential modules.

3. The modular experiential water tunnel of claim 2, the shell being at least partially supported by the one or more support structures.

4. The modular experiential water tunnel of claim 1, the one or more support structures having the shape of an arch.

5. The modular experiential water tunnel of claim 4, the one or more experiential modules being integrated in the one or more arches.

6. The modular experiential water tunnel of claim 1, the one or more support structures being supported by side walls of the water ride.

7. The modular experiential water tunnel of claim 1, the one or more support structures making a curved path between the entrance and the exit.

8. The modular experiential water tunnel of claim 1, the one or more support structures having varying shapes.

9. The modular experiential water tunnel of claim 1, the one or more experiential modules being any one or a combination of: laser, LED lighting module, water curtain, speaker, fog generator and projector.

10. The modular experiential water tunnel of claim 9, the one or more LED lighting modules illuminating an inner surface of the one or more support structures.

11. The modular experiential water tunnel of claim 9, wherein two or more of the experiential modules are operating conjointly.

12. The modular experiential water tunnel of claim 1, further comprising sensors activating the one or more experiential modules when a predetermined condition is met.

13. The modular experiential water tunnel of claim 1, further comprising a controller for controlling the one or more experiential modules.

14. The modular experiential water tunnel of claim 13, the controller acting as a client to retrieve instructions for operating the one or more experiential modules from a remote server.

15. The modular experiential water tunnel of claim 13, further comprising a user interface for a user to control the one or more experiential modules.

16. A method for producing an experience in a modular water tunnel, comprising:
receiving a user in an entrance of the modular water tunnel, the user being displaced by a water ride passing under one or more support structures and towards an exit of the modular water tunnel;
producing an experience for the user with one or more experiential modules supported by the one or more support structures.

17. The method for producing an experience in a modular water tunnel of claim 17, further comprising:
activating the experiential modules with one or more sensors having a met predetermined condition.

18. The method for producing an experience in a modular water tunnel of claim 17, further comprising:
operating two or more experiential modules conjointly.

19. The method for producing an experience in a modular water tunnel of claim 17, further comprising:
controlling the one or more experiential modules with a controller, the controller being connected to a user interface.
